# EUROPÄISCHE PATENTSCHRIFT

(11) **EP 3 743 359 B1**
(45) Veröffentlichungstag und Bekanntmachung des Hinweises auf die Patenterteilung: **24.11.2021**
(21) Anmeldenummer: 19702040.7
(22) Anmeldetag: 22.01.2019
(51) Int. Cl.: B65D 85/804

(54) **VERFAHREN ZUR HERSTELLUNG EINES GETRÄNKS MIT EINER PORTIONSPACKUNG UND PORTIONSPACKUNG**
METHOD FOR PRODUCING A BEVERAGE USING A PORTION PACK, AND PORTION PACK
PROCÉDÉ SERVANT À FABRIQUER UNE BOISSON AVEC UN EMBALLAGE-PORTION ET EMBALLAGE-PORTION

(30) Priorität: 22.01.2018 DE 102018101338
(43) Veröffentlichungstag der Anmeldung: 02.12.2020
(73) Patentinhaber: Melitta Single Portions GmbH & Co. KG, 32425 Minden (DE)
(72) Erfinder: FERNANDES DE CARVALHO, Kerstin, 33604 Bielefeld (DE); PAHNKE, Jan, 32427 Minden (DE); FELDMANN, Holger, 47877 Willich (DE); SCHANDL, Gerold, 32425 Minden (DE)
(74) Vertreter: Dantz, Jan Henning
(86) Internationale Anmeldenummer: PCT/EP2019/051523
(87) Internationale Veröffentlichungsnummer: WO 2019/141872

(56) Entgegenhaltungen:
- EP-A1- 2 752 375
- EP-B1- 0 268 847
- EP-B1- 0 401 951
- DE-A1- 19 520 837

## Beschreibung

Die vorliegende Erfindung betrifft ein Verfahren zur Herstellung eines Getränks mit einer Portionspackung, umfassend einen Behälter aus Filtermaterial, in dem ein Extraktionsmaterial angeordnet ist, und einen Stützkörper, der den Behälter umgibt, sowie eine Portionspackung, umfassend einen Behälter aus Filtermaterial, in dem ein Extraktionsmaterial angeordnet ist, und einen Stützkörper der den Behälter zumindest bereichsweise umgibt, wobei der Behälter in einer Ausgangsposition geschlossen ausgebildet ist und durch Verschwenken zumindest eines Teils des Randes des Filtermaterials zu öffnen ist.

Zur Zubereitung von Kaffee gibt es Filter, die gemäß der EP 268 847 B1 einen auf einem Gefäß aufsetzbaren Halterahmen aus Karton und einen Filterbeutel aus Filterpapier aufweisen. Dadurch kann der Filterbeutel über den Halterahmen in einer vorbestimmten Position gehalten werden, so dass der Benutzer zum Brühen von Kaffee den Filterbeutel befüllt und anschließend einen Brühvorgang durchführt. Zwar kann durch das individuelle Befüllen des Filterpapiers und das manuelle Brühen der Kaffeegeschmack individuell bei der Zubereitung berücksichtigt werden, das Mahlen und Befüllen des Filterbeutels mit Kaffeemehl und das anschließende manuelle Brühen ist jedoch vergleichsweise aufwändig.

EP 2 752 375 A1 offenbart eine Vorrichtung zur Zubereitung eines Aufgussgetränks nach dem Oberbegriff des Anspruches 6 und ein Verfahren zur Herstellung eines Getränkes nach dem Oberbegriff des Anspruches 1.

In der DE 195 20 837 A1 ist ein Portionskaffeefilterbeutel mit gemahlenem Kaffee gezeigt, der vakuumverpackt ausgebildet sein kann und nach der Entnahme aus der Verpackung gebrauchsfertig ist. Solche Portionspackungen sind in vielfältiger Form bekannt und besitzen den Nachteil, dass die Bedürfnisse beim Zubereiten von Kaffee nur unzureichend berücksichtigt werden. Beim Brühen von Kaffee vergrößert sich das Volumen des Kaffeemehls, und, anders als bei der Herstellung von Espresso mit hohem Druck, soll sich das Kaffeemehl beim Aufgießen entfalten können. Zudem sind eine definierte Kaffeebettgeometrie und eine gleichmäßige Durchfeuchtung des Kaffeemehls beim Herstellen hochwertiger Kaffeegetränke erforderlich, was bei herkömmlichen Portionspackungen häufig nicht erreicht wird.

Die EP 401 951 B1 offenbart eine Filtervorrichtung mit einem Filterbeutel aus Papier und einem Stützkörper, der auf einer Tasse abstellbar ist, um eine Handbrühung vorzunehmen.

Es ist daher Aufgabe der vorliegenden Erfindung, ein Verfahren zur Herstellung eines Getränkes sowie eine Portionspackung hierfür zu schaffen, mittels denen eine einfache Zubereitung möglich ist, wobei das Transportvolumen der Portionspackung in der geschlossenen Position klein sein soll, während das Volumen der Portionspackung die Zubereitung nicht einschränken soll.

Diese Aufgabe wird mit einem Verfahren mit den Merkmalen des Anspruches 1 sowie einer Portionspackung mit den Merkmalen des Anspruches 6 gelöst.

Bei dem erfindungsgemäßen Verfahren wird eine geschlossene Portionspackung in ein Filtergefäß eingelegt, und vor oder nach dem Einlegen der Portionspackung wird der Behälter der Portionspackung an einer Oberseite geöffnet, wobei das Innenvolumen des Behälters um mindestens 50 % verglichen mit dem Innenvolumen in der geschlossenen Position vergrößert wird. Dabei wird das Innenvolumen in der geschlossenen Position des Behälters durch den Innenraum des Behälters definiert, der von dem Filtermaterial umgeben ist, während in der geöffneten Position das Innenvolumen durch das Filtermaterial definiert wird, das in der geöffneten Position einen oberen Rand besitzt. Dieser Rand bildet eine horizontale Ebene aus und bildet somit die obere Grenze des Innenvolumens. Sollte der obere Rand profiliert oder mit Vorsprüngen und Aussparungen versehen sein, wird ein Mittelwert des oberen Randes bezüglich der vertikalen Höhe gebildet, um diesen zur Berechnung des Innenvolumens heranzuziehen. Das so gebildete Innenvolumen in der geöffneten Position ist dabei gemäss Ansprüchen 1 und 6 mindestens 50 % größer verglichen mit dem Innenvolumen in der geschlossenen Position, so dass bei der Zubereitung des Getränks durch Aufbringen von Wasser auf das Extraktionsmaterial dieses nicht komprimiert wird, sondern ausgasen und aufquellen kann, ohne räumlich beschränkt zu sein. Bei gleichmäßiger Durchfeuchtung des Extraktionsmaterials, insbesondere des Kaffeemehls, kann somit ein qualitativ hochwertiger Kaffee gebrüht werden.

Ein den Behälter umgebender Stützkörper weist dabei mindestens eine Faltkante auf, um die eine Klappe verschwenkbar ist, an der ein oberer Abschnitt aus Filtermaterial fixiert ist. Dadurch kann über eine oder mehrere Klappen des Stützkörpers ein Öffnungsvorgang bewirkt werden. Für die Öffnung kann die Portionspackung im Bereich der Faltkanten befeuchtet werden, so dass ein Öffnen der Portionspackung selbsttätig erfolgen kann.

Vorzugsweise weist der Stützkörperan der Oberseite des Behälters in der geschlossenen Position mehrere Klappen auf, die über Faltkanten mit einem Abschnitt an einer Seitenwand des Behälters verbunden sind. Durch Befeuchten der Faltkanten kann ein Quellprozess in Gang gesetzt werden, der zu einer Verformung und zu einem Aufschwenken der Klappen an der Oberseite des Behälters führt. Der Stützkörper ist vorzugsweise ringförmig an einem oberen Rand des Behälters in der geschlossenen Position vorgesehen, so dass durch Benetzung der Oberseite der Portionspackung mit Wasser optional das Verschlussmittel gelöst werden kann und insbesondere ein Verformungsprozess eingeleitet wird, der für ein Aufschwenken der Klappen sorgt. Der Stützkörper besteht vorzugsweise aus einem durch Wasser aufquellbaren Material, wie Karton oder einem dicken Papier, so dass ein Quellvorgang an einer Faltkante für entsprechende Schwenkbewegungen an den Klappen sorgt.

Bei der erfindungsgemäßen Portionspackung weist der Stützkörper mindestens eine Faltkante auf, um die eine Klappe verschwenkbar ist, um das Innenvolumen des Behälters beim Öffnen um mindestens 50 % zu vergrößern. Dabei können entlang einer umlaufenden Faltkante mehrere Klappen vorgesehen sein, die dann beim Öffnen verschwenkt werden.

Für eine effektive Herstellung weist der Behälter mit dem Stützkörper in der geschlossenen Position in Draufsicht eine eckige Form auf, insbesondere ein fünf- bis achteckige Form, beispielsweise sechseckig. Dadurch kann zwischen den einzelnen Ecken des Behälters jeweils eine Faltkante vorgesehen sein, an denen jeweils eine Klappe verschwenkbar gelagert ist.

Der Behälter weist an der Unterseite vorzugsweise eine Spitze aus Filtermaterial auf, die nicht von dem Stützkörper überdeckt ist. Dadurch ist in einem unteren Bereich nur das Filtermaterial vorgesehen, das bei der Zubereitung des Getränks durchströmt werden kann, so dass der Stützkörper den Zubereitungsprozess für das Getränk nicht behindert. Die Spitze kann dabei kegelstumpfförmig oder pyramidenförmig ausgebildet sein, wobei der nicht durch den Stützkörper bedeckte Bereich mindestens 30 % der Höhe der Portionspackung in der Zubereitungsposition einnimmt. In der Gebrauchsposition mit nach unten weisender Spitze der Portionspackung bemisst sich die Höhe in vertikale Richtung.

Um die effektive Filterfläche zu vergrößern, können Abstandshalter, zum Beispiel Rippen, Profilierungen, Prägungen oder Ausschnitte, am Stützkörper angebracht sein. Dadurch kann der Stützkörper über die Abstandshalter exakt in einem Filtergefäß positioniert werden. Dabei kann das Filtermaterial im unteren Bereich beabstandet von einem Filtergefäß gehalten sein.

Das Filtermaterial ist - bedingt durch besagte Fixierung eines oberen Abschnitts an der mindestens einen Klappe - mit dem Stützkörper zusammen an der Oberseite entfaltbar, wobei Stützkörper und Filtermaterial hierzu beispielsweise miteinander verklebt oder mechanisch aneinander festgelegt sind. Das Filtermaterial ist in einer Ausgangsposition an einer Oberseite des Behälters gefaltet, also zumindest bereichsweise mehrlagig angeordnet, und kann über den Stützkörper und/oder die Verschlussmittel gehalten werden. Nach Lösen der Verschlussmittel kann dann das Filtermaterial mit den Klappen des Stützkörpers verschwenken, so dass der Bereich des Filtermaterials, der in einer Ausgangsposition eine obere Abdeckung für die Portionspackung bildet, nach dem Öffnen und Verschwenken eine Seitenwand ausbildet, so dass sich das in der Portionspackung befindliche Extraktionsmaterial bei der Zubereitung entsprechend ausdehnen kann.

Bei dem erfindungsgemäßen Verfahren wird zunächst die Portionspackung in eine Vorrichtung zur Getränkezubereitung eingelegt, und anschließend wird Wasser auf die Portionspackung aufgebracht und ein an der Portionspackung vorgesehenes Verschlussmittel durch Befeuchtung mit Wasser gelöst. Durch ein Lösen des Verschlussmittels kann die Portionspackung geöffnet und ein Stützkörper der Portionspackung entfaltet werden. Anschließend wird Wasser auf das in dem Behälter angeordnete Extraktionsmaterial zur Getränkezubereitung aufgebracht, so dass die Getränkezubereitung in einer geöffneten Position der Portionspackung erfolgt und sich das Extraktionsmaterial entsprechend ausdehnen kann.

Vorzugsweise wird zum Lösen des Verschlussmittels heißes Wasser eingesetzt, beispielsweise Wasser, das zwischen 70° und 100° heiß ist. Dieses heiße Wasser kann sowohl zum Lösen des Verschlussmittels als auch zum Entfalten des Stützkörpers eingesetzt werden, indem durch ein Aufsaugen von Wasser lokale Quellprozesse eingeleitet werden, was zu einem Entfalten führt. Für das Lösen des Verschlussmittels und Öffnen der Portionspackung wird eine erste Menge an Wasser eingesetzt, die beispielsweise 5 ml bis 100 ml, insbesondere 10 ml bis 50 ml, umfasst. Dieses Wasser kann insbesondere bei der Zubereitung von Kaffee zusätzlich zum Vorbefeuchten, Quellen und Entgasen verwendet werden. Dies wird auch als Vorbrühen bezeichnet. Nach dem Öffnen wird eine zweite Menge an Wasser, insbesondere heißes Wasser, für die Getränkezubereitung zugeführt. Die zweite Menge an Wasser kann dann beispielsweise 100 ml bis 500 ml, insbesondere 150 ml bis 250 ml, umfassen, je nachdem, welche Menge an Getränk zubereitet wird.

Beim Öffnen der Portionspackung werden vorzugsweise die Klappen des Stützkörpers an einer Oberseite des Behälters zwischen 90° und 180°, insbesondere zwischen 110° bis 150°, verschwenkt, so dass das Extraktionsmaterial von oben frei zugänglich ist und sich entsprechend auch nach oben ausdehnen kann. Das durch das Öffnen der Klappen zusätzlich entstehende Volumen ist mindestens genauso groß, typischerweise sogar mehr als doppelt so groß wie das ursprüngliche Volumen der geschlossenen Portionspackung. Das zusätzliche Volumen kann auch vom Lösungsmittel genutzt werden. Bei der Zubereitung von Kaffee entsteht beispielsweise eine Dispersion aus Kaffeemehl und Wasser.

In einer bevorzugten Ausgestaltung sind die verschwenkbaren Klappen zumindest im Bereich der Verschlussmittel in der geschlossenen Position der Portionspackung in mindestens zwei Ebenen aufeinander angeordnet, um den Verschluss der Portionspackung besonders stabil auszubilden.

Die Erfindung wird nachfolgend anhand mehrerer Ausführungsbeispiele mit Bezug auf die beigefügten Zeichnungen näher erläutert. Es zeigen:
- Figuren 1 bis 3: mehrere Ansichten einer Portionspackung in unterschiedlichen Positionen;
- Figur 4: eine schematische Ansicht einer Portionspackung in einer geschlossenen Ausgangsposition;
- Figur 5: eine schematische Ansicht der Portionspackung der Figur 4 beim Öffnungsprozess;
- Figur 6: eine schematische Ansicht der Portionspackung der Figur 4 bei der Getränkezubereitung;
- Figur 7: eine Ansicht eines Zuschnitts des Filtermaterials für eine Portionspackung;
- Figur 8: eine Ansicht eines Zuschnitts eines Stützkörpers für eine Portionspackung;
- Figur 9: Ansichten eines modifizierten Stützkörpers für eine Portionspackung mit integriertem Verschlusselement;
- Figur 10: eine perspektivische Ansicht einer Portionspackung in einer geöffneten Position gemäß einem weiteren Ausführungsbeispiel;
- Figur 11: eine perspektivische Ansicht einer Portionspackung in einer geschlossenen Position;
- Figuren 12 bis: 16 mehrere Ansichten der Portionspackung der Figur 10 bei einem Öffnungsvorgang, und
- Figur 17: eine Ansicht des Zuschnittes des Stützkörpers für die Portionspackung der Figuren 12 bis 16.

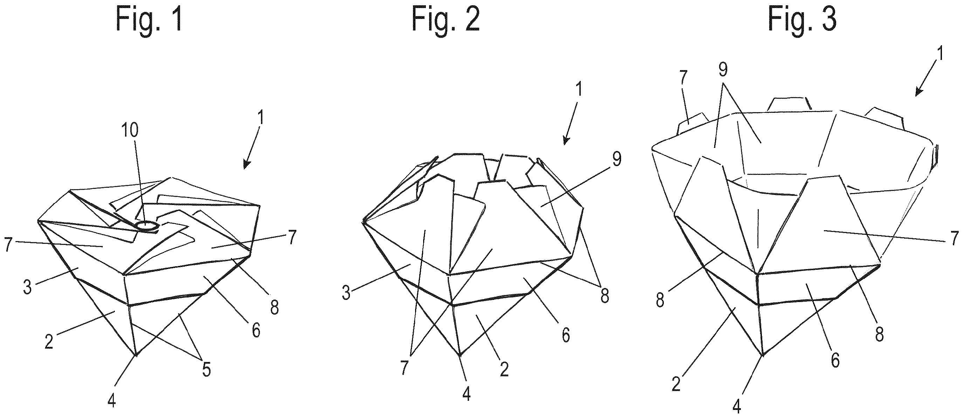

Eine Portionspackung 1 umfasst einen Behälter 2 aus Filtermaterial, der eine untere Spitze 4 aufweist, von der sich Seitenwände aufweitend nach oben erstrecken. In der in Figur 1 dargestellten geschlossenen Position befindet sich an einem oberen Rand des Behälters 2 ein Stützkörper 3, der diesen ringförmig umgibt. Der Stützkörper 3 ist dabei nur im Bereich eines oberen Randes der Portionspackung 1 vorgesehen, während die nach unten ragende Spitze nicht von dem Stützkörper 3 überdeckt ist.

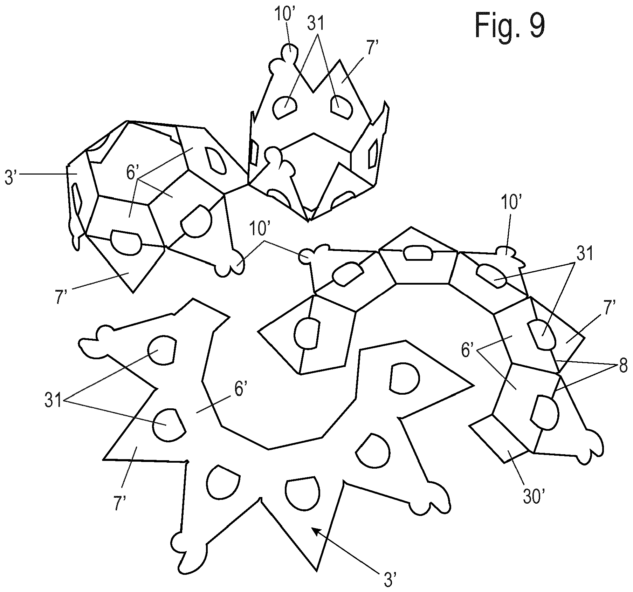

Der Behälter 2 ist pyramidenförmig ausgebildet und umfasst ausgehend von der Spitze 4 mehrere aufspreizende Seitenflächen, die über Seitenkanten 5 miteinander verbunden sind. Der Stützkörper 3 ist im Bereich dieser Seitenflächen ringförmig ausgebildet und umfasst Abschnitte 6, die die Seitenfläche zumindest in oberen Bereich überdecken, der vorzugsweise bezogen auf die Höhe der Portionspackung 1 kleiner als 50%, insbesondere 25-40% der gesamten Höhe der geschlossenen Portionspackung ausgebildet ist, wobei die Höhenrichtung in der Gebrauchsposition vorzugsweise vertikal ausgerichtet ist. Diese Abschnitte 6 sind über Faltkanten 8 mit Klappen 7 verbunden, die in der Ausgangsposition im Wesentlichen horizontal an einer Oberseite der Portionspackung 1 angeordnet sind, wobei die Klappen 7 optional auch geneigt zur Horizontalen ausgerichtet sein können. Zumindest ist die Portionspackung 1 in einer Ausgangsposition geschlossen, wobei hierfür ein Verschlussmittel 10 vorgesehen ist, das als Haltemittel ausgebildet ist und die Klappen 7 in einem mittleren Bereich zusammenhält. Hierfür kann das Verschlussmittel beispielsweise als Flächenelement ausgebildet sein, das mit den Spitzen der Klappen 7 verklebt ist, vorzugsweise mit einem für die Zubereitung von Lebensmitteln zugelassenen Klebemittel. In einer weiteren Ausführungsform kann das Verschlussmittel auch als mechanisches Rastmittel ausgebildet sein, das in die Geometrie des Stützkörpers integriert sein, wie die in Figur 9 dargestellt und unten beschrieben ist.

In Figur 2 ist eine mittlere Öffnungsposition der Portionspackung 1 gezeigt. Durch Lösen des Verschlussmittels 10 können die Klappen 7 des Stützkörpers um die Faltkanten 8 verschwenkt werden, wobei an den Klappen 7 ein oberer Abschnitt des Filtermaterials des Behälters 2 festgelegt ist. Das Filtermaterial ist im oberen Bereich in der geschlossenen Position gefaltet ausgebildet und kann dann durch Verschwenken der Klappen 7 entfaltet werden.

In Figur 3 ist die Portionspackung 1 in einer geöffneten Position gezeigt, in der die Klappen 7 um etwa 130°, also zwischen 110° und 150°, verschwenkt wurden und dadurch ein oberer Abschnitt 9 des Filtermaterials, der zumindest bereichsweise an den Klappen 7 fixiert ist, ebenfalls verschwenkt wurde. In dieser Öffnungsposition ist das in der Positionspackung 1 angeordnete Extraktionsmaterial von oben zugänglich und kann beispielsweise mit heißem Wasser übergossen werden.

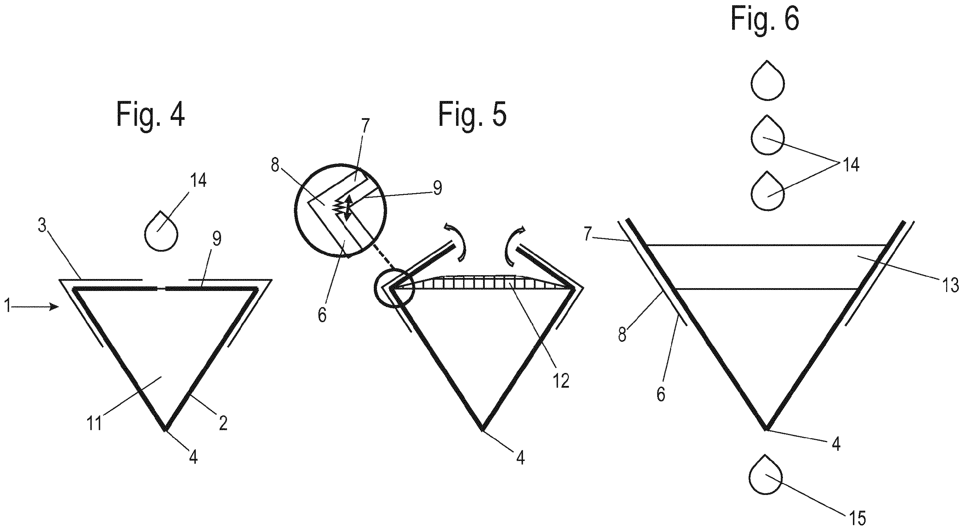

In Figur 4 ist die Portionspackung 1 schematisch dargestellt, um den Prozess der Getränkezubereitung darzustellen. In der Portionspackung 1 befindet sich ein Extraktionsmaterial 11, insbesondere Kaffeemehl. Der Behälter 2 aus Filtermaterial ist in einer Schnittansicht im Wesentlichen dreieckförmig ausgebildet und umfasst eine untere Spitze 4 und einen oberen Abschnitt 9, der im Wesentlichen horizontal ausgerichtet ist. Durch eine erste Menge an Wasser, insbesondere heißes Wasser, beispielsweise zwischen 10 ml und 50 ml, wie dies durch den Tropfen 14 schematisch dargestellt wird, kann ein an der Oberseite der Portionspackung 1 angeordnetes Verschlussmittel 10 gelöst werden. Durch die Befeuchtung mit Wasser kann das Klebemittel gelöst, das Material des Verschlussmittels bis zum Versagen geschwächt oder die Steifigkeit einer Steckverbindung herabgesetzt werden, so dass keine Haltekräfte mehr durch das Verschlussmittel erzeugt werden können.

Die erste Menge an Wasser ist vorzugsweise so groß, dass sich die Flüssigkeit an einer Oberseite der Portionspackung 1 verteilen kann, so dass auch der Stützkörper 3 zumindest teilweise mit Wasser vollsaugen kann. Der Stützkörper 3 besteht vorzugsweise aus Karton oder einem dicken Papier.

Wie in Figur 5 dargestellt ist, kann an einer oberen Faltkante 8 des Stützkörpers durch die Benetzung mit Wasser ein lokaler Quellprozess erzeugt werden, der dafür sorgt, dass eine Innenseite der Faltkante aufquillt, so dass eine Klappe 7 relativ zu dem Abschnitt 6 verschwenkt. Das Aufquellen wird dadurch erreicht, dass das Material des Stützkörpers 3 an der Innenseite der Faltkante komprimiert ist und durch das Aufnehmen von Wasser eine Volumenvergrößerung stattfindet.

Durch das Verschwenken der Klappen 7 wird die Portionspackung 1 nach oben hin geöffnet, und es kann nun heißes Wasser auf das Extraktionsmaterial 11, insbesondere zur Herstellung von Kaffee oder Tee, aufgebracht werden. Durch Aufquellen des Extraktionsmaterials vergrößert sich dessen Volumen, in der Zeichnung wird dies durch den oberen Bereich als Zusatzvolumen 12 dargestellt. Insbesondere bei der Zubereitung von hochwertigem Kaffee sind die Schritte Vorbefeuchten, Quellen und Entgasen wichtig.

In Figur 6 ist der Brühvorgang zur Getränkezubereitung schematisch dargestellt. Eine zweite Menge an Wasser gemäß der Tropfen 14 wird von oben auf die Portionspackung 1 aufgebracht, um das Extraktionsmaterial 11, insbesondere Kaffeemehl, aufzubrühen. Hierbei kann sich das Extraktionsmaterial nach oben hin vergrößern und zusätzlich in Dispersion mit dem Lösungsmittel gehen, wie dies insbesondere bei Kaffeemehl beim Brühvorgang auftritt. Dies wird in der Zeichnung als Zusatzvolumen 13 dargestellt, das über das Volumen des trockenen Kaffeemehls hinausgeht. An den Seitenwänden tritt das gefilterte Getränk 15 aus, sammelt sich unten, durch den Tropfen symbolisiert, und kann zum Beispiel in einer Tasse aufgefangen werden. Der Benutzer kann nach der Getränkezubereitung die Portionspackung an den Klappen 7 gut greifen und entsorgen.

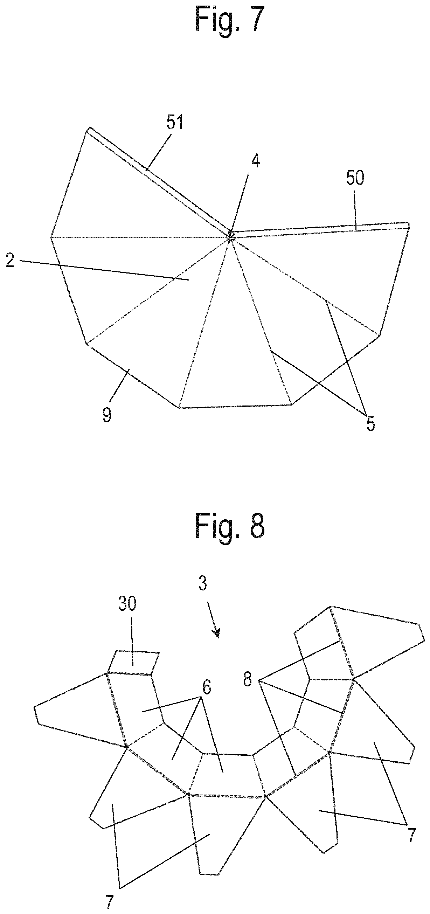

In Figur 7 ist ein Materialzuschnitt des Filtermaterials vor der Konfektionierung zu einem Behälter 2 gezeigt. Das Filtermaterial ist in einer flachen Position im Wesentlichen kreisausschnittsförmig ausgebildet, wobei am äußeren Umfang gerade Kanten statt eines gerundeten Umfangs vorgesehen sind, wobei alternativ statt der Kanten auch Bögen vorgesehen sein können. In jedem Fall weist der Zuschnitt aus Filtermaterial zwei Randstreifen 50 und 51 auf, die an einer Spitze 4 aufeinandertreffen und miteinander verbunden werden, beispielsweise durch Kleben oder Verprägen, um eine schalen-, kegel- oder pyramidenförmige Grundform zu erhalten. Das Filtermaterial besteht vorzugsweise aus Filterpapier.

In Figur 8 ist ein Zuschnitt des Stützkörpers 3 im flachen Zustand gezeigt. Der Stützkörper 3 umfasst einen offenen ringförmigen Abschnitt, an dem nach außen hervorstehende Klappen 7 vorgesehen sind. Die Klappen 7 sind V-förmig oder konusförmig ausgebildet und verjüngen sich nach außen hin. Die Klappen 7 sind über Faltkanten 8 mit zusammenhängenden Abschnitten 6 verbunden, wobei an einem endseitigen Abschnitt 6 ein Randabschnitt 30 angeformt ist, der mit einem Abschnitt 6 am gegenüberliegenden Ende verbunden wird, insbesondere durch Kleben, Siegeln oder Prägen, um einen ringförmigen Stützkörper 3 herzustellen. Die Klappen 7 können dann zumindest bereichsweise mit dem oberen Abschnitt 9 des Filtermaterials zur Herstellung einer Portionspackung 1 verbunden werden, wiederum vorzugsweise durch die Verbindungstechniken Kleben, Siegeln oder Prägen.

In Figur 9 ist ein modifizierter Materialzuschnitt eines Stützkörpers 3' gezeigt, der in unterschiedlichen Positionen und Montagezuständen dargestellt ist. Der Stützkörper 3' ist in einer Ausgangsposition flach ausgebildet und umfasst zusammenhängende Abschnitte 6 an einem inneren Umfang, die einen offenen Ring bilden. Von den Abschnitten 6 stehen nach außen Klappen 7 hervor, die V-förmig ausgebildet sind, wobei an jeder Klappe eine Aussparung 31 ausgebildet ist. Der flache Zuschnitt wird zur Herstellung eines Stützkörpers 3' zunächst mit Faltkanten 8 versehen, so dass die Klappen 7' verschwenkbar an den Abschnitten 6' gelagert sind. An einzelnen Klappen 7' sind Vorsprünge 10' als Verschlussmittel ausgebildet, die endseitig an den Klappen 7' hervorstehen. Wenn der Stützkörper 3' über einen Randabschnitt 30' zu einem Ring geformt ist, wird er an einem Behälter 2 aus Filtermaterial angeordnet, der mit einem Extraktionsmaterial, insbesondere Kaffeemehl, befüllt wird. Anschließend werden die Klappen 7', die zumindest teilweise mit dem Abschnitt 9 des Filtermaterials verbunden sein können, in eine geschlossene Position verschwenkt, wobei in diesem Fall die Verschlussmittel durch die Vorsprünge 10' gebildet sind, die für eine mechanische Verriegelung der Portionspackung sorgen. Dies kann ein zusätzliches Element und den Einsatz von Klebemittel erübrigen. Auch bei diesem Ausführungsbeispiel erfolgt das Öffnen der Portionspackung durch den Einsatz von heißem Wasser, das auf eine Oberseite der Portionspackung aufgebracht wird, so dass Quellprozesse an dem Stützkörper 3', insbesondere im Bereich der Faltkanten 8, teilweise in Kombination mit Vorspannungen im Stützkörper, dafür sorgen, dass die Klappen 7' die Haltekräfte durch die Vorsprünge 10' überwinden und dann verschwenken. Durch Modifikation der Aussparungen 31 kann Einfluss auf den Öffnungsprozess genommen werden.

Um die Öffnungsgeschwindigkeit zu optimieren, können an der umlaufenden Faltkante 8 zwischen 20% bis 50% ausgeschnitten sein. Wenn keine Aussparungen an der Faltkante 8 vorgesehen sind, öffnen sich zwar die Klappen 7 und 7', allerdings mit langsamerer Geschwindigkeit als mit Aussparungen.

In dem dargestellten Ausführungsbeispiel sind die Portionspackungen zur Zubereitung von Kaffee vorgesehen. Es ist natürlich auch möglich, andere Getränke herzustellen, insbesondere Tee oder Kaffeemischgetränke, wobei durch das Öffnen der Portionspackung das eingesetzte Extraktionsmaterial expandieren und aufquellen kann, ohne dass dies zu Problemen bei der Getränkezubereitung führt. Des Weiteren kann auch vollständig lösliches Extraktionsmaterial verwendet werden, bei der Herstellung von zum Beispiel Kakaogetränken stellt das Filterelement sicher, dass keine ungelösten Klumpen im Getränk landen.

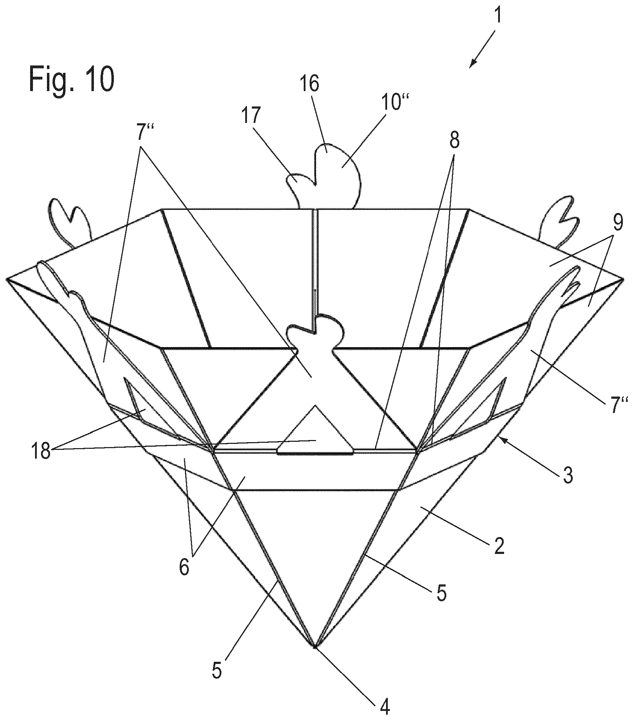

In Figur 10 ist eine Portionspackung in einer geöffneten Position gemäß einem weiteren Ausführungsbeispiel gezeigt. Die Portionspackung 1 umfasst wie bei den vorangegangenen Ausführungsbeispielen einen Behälter 2 aus einem flüssigkeitsdurchlässigem Filtermaterial, insbesondere Filterpapier, um den ein Stützkörper 3 ringförmig angeordnet ist. Der Behälter 2 ist im Wesentlichen pyramidenförmig ausgebildet mit einer in der Gebrauchsposition unten angeordneten Spitze 4, von der mehrere Seitenwände aus Filtermaterial nach oben aufspreizend angeordnet sind, die über Seitenkanten 5 miteinander verbunden sind.

Der Stützkörper 3 kann aus Kartonage oder einem dickeren Papier hergestellt sein und umfasst seitliche Abschnitte 6, die mit dem Filtermaterial des Behälters 2 an den Seitenrändern verbunden sein können, beispielsweise durch Verkleben. Die seitlichen Abschnitte sind dabei streifenförmig ausgebildet und nur in einem oberen Bereich der Seitenwände angeordnet, so dass benachbart zu der Spitze 4 das Filtermaterial nicht durch die Abschnitte 6 überdeckt ist. In einer weiteren Ausführung ist der Behälter 2 nur an den Klappen 7" mit dem Stützkörper verbunden.

Der Stützkörper 3 umfasst an den seitlichen Abschnitten 6 verschwenkbare Arme oder Klappen 7", die jeweils über eine Faltkante 8 mit einem seitlichen Abschnitt 6 verbunden sind. In dem dargestellten Ausführungsbeispiel sind sechs Klappen 7" vorgesehen, die im Wesentlichen dreieckförmig ausgebildet sind und einen Innenraum des Behälters 2 nach Art eines Sechsecks umgeben. An den Klappen 7" ist ein Abschnitt aus Filtermaterial fixiert, beispielsweise durch Verkleben, so dass bei einer Bewegung der Klappen 7" auch das Filtermaterial verschwenkt wird. An jeder Klappe 7" ist eine Aussparung 18 vorgesehen, um ein Öffnen zu erleichtern. Es ist auch möglich, auf eine Aussparung 18 im Bereich der Klappen 7" zu verzichten.

An jeder Klappe 7" ist endseitig ein Verschlussmittel 10" vorgesehen, das eine Führungskante 16 aufweist und einen Rastvorsprung 17. Die Verschlussmittel 10" von zwei, drei oder vier Klappen 7" können miteinander verriegelt werden, indem die Verschlussmittel 10" aufeinander gefaltet werden.

In dem Behälter 2 befindet sich ein Extraktionsmaterial, insbesondere Kaffeemehl oder Tee.

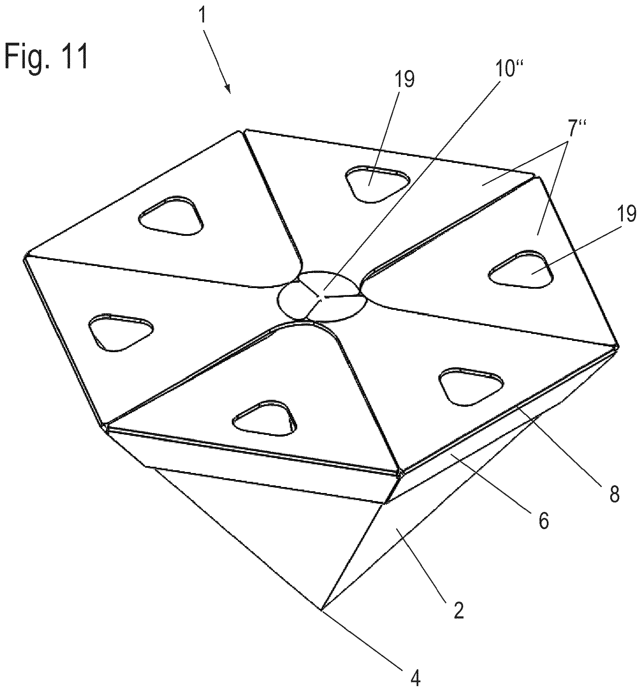

In Figur 11 ist die Portionspackung 1 in einer geschlossenen Position dargestellt, in der sie pyramidenförmig ausgebildet ist. Die Portionspackung 1 kann so in eine Maschine zur Zubereitung eines Brühgetränks eingesetzt werden. Verglichen mit Figur 1 erstrecken sich Aussparungen 19 nicht bis zu der Faltkante 8, sondern sind etwas kleiner ausgebildet, im Übrigen entspricht das Ausführungsbeispiel der Figur 10. Je nach gewünschter Funktionalität können die Aussparungen 19 unterschiedliche Geometrien haben, oder es kann auf sie verzichtet werden.

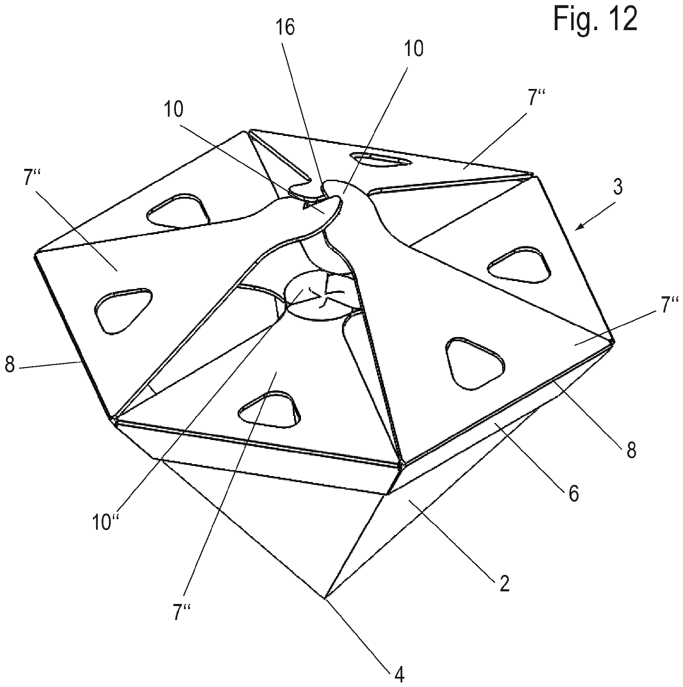

Der Öffnungsvorgang wird mit Bezug auf die Figuren 12 bis 16 näher erläutert. Um die Portionspackung 1 zu öffnen, kann wahlweise manuell ein Öffnen der Klappe 7" erfolgen, oder über ein Aufbringen von einer Flüssigkeit, insbesondere heißem Wasser, was zu Quellprozessen an dem Stützkörper 3 im Bereich der Faltkanten 8 führt und ein automatisches Öffnen bewirkt.

In Figur 12 wurden drei Klappen 7" leicht geöffnet, und es ist erkennbar, dass diese drei Klappen 7" im Bereich der Verschlussmittel 10" einander überlappen und gemeinsam um die jeweiligen Faltkanten 8 verschwenkt werden können. Dabei werden die Verschlussmittel 10" entriegelt und gleiten entlang der Führungskanten 16. Drei weitere Klappen 7" sind in Figur 12 noch in der geschlossenen verriegelten Position, so dass in dieser Position ein Austreten von Kaffeemehl durch die drei verschlossenen Klappen 7" verhindert wird. Um den Öffnungsvorgang zu erläutern, wurden die oberen Abschnitte 9 des Filtermaterials in den Figuren 12 bis 16 in dem Bereich der Klappen 7" weggelassen.

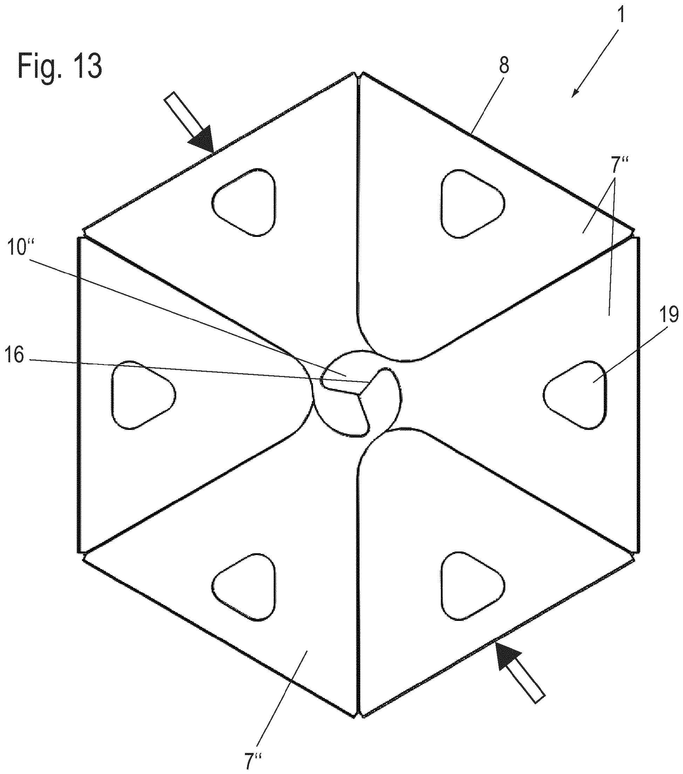

In Figur 13 ist die Portionspackung 1 der Figur 12 in einer Draufsicht gezeigt. Wird die Portionspackung 1 einer Stoß- oder Druckbelastung ausgesetzt, wie dies durch die Pfeile symbolisch dargestellt ist, kann gegebenenfalls ein Öffnen der drei oberen Klappen 7" bewirkt werden, deren Verschlussmittel 10" in der geschlossenen Position oberhalb der Verschlussmittel 10" der drei unteren Klappen 7" angeordnet sind. Die Portionspackung 1 bleibt dennoch geschlossen, da die Verschlussmittel 10" der drei unteren Klappen 7" verriegelt bleiben. Im Fall einer Torsion durch Schubbelastung stabilisiert je nach Richtung entweder das untere oder das obere aus den Klappen 7" gebildete Speichentripel den Verschluss, da die Führungskanten 16 und die Rastvorsprünge 17 jeweils abwechselnd in die eine beziehungsweise andere Richtung orientiert sind.

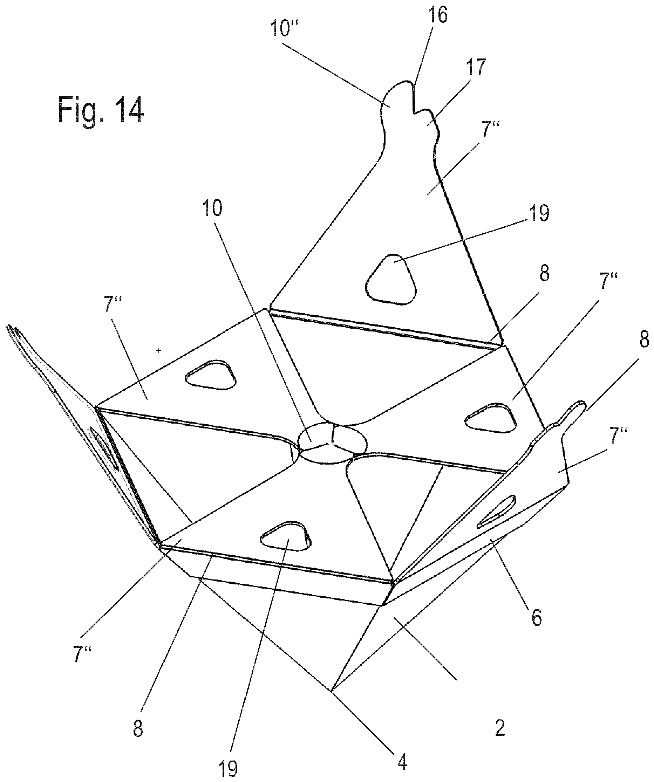

In Figur 14 sind die drei Klappen 7" um über 90° verschwenkt worden, während die drei unteren Klappen 7" über die Verschlussmittel 10" noch verriegelt sind. Es ist erkennbar, dass die drei unteren Klappen 7" den Behälter 2 noch im Wesentlichen verschließen, wobei das Filtermaterial im Bereich der unteren Klappen 7" zusätzlich die Öffnung an der Portionspackung 1 abdichtet.

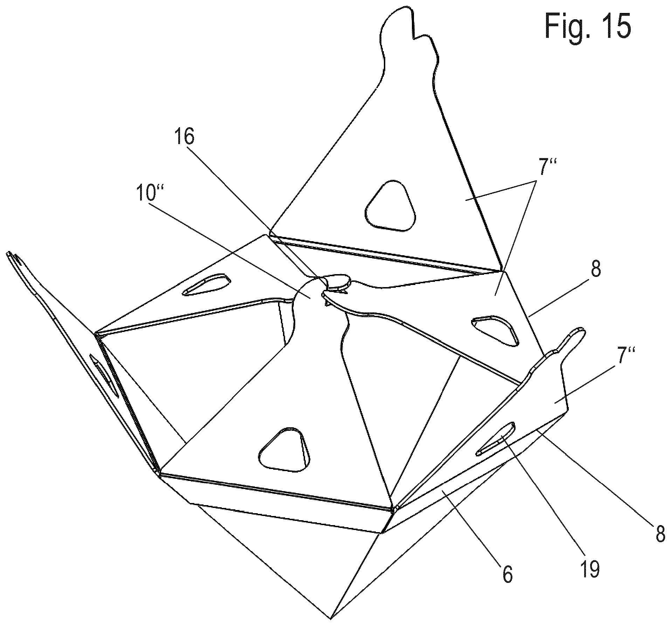

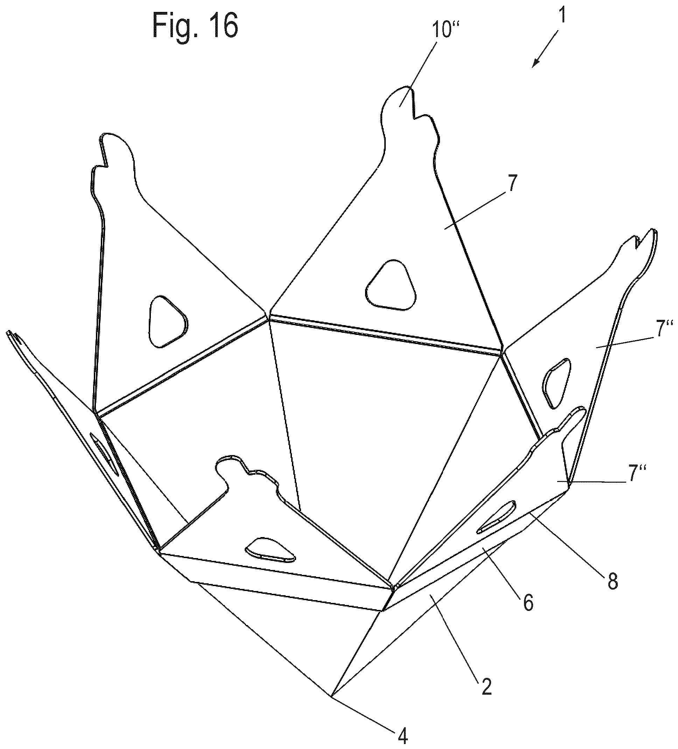

In Figur 15 sind die unteren Klappen 7" in einer leicht geöffneten Position gezeigt, in der die Verschlussmittel 10" entriegelt werden. In Figur 16 ist die Portionspackung 1 in einer vollständig geöffneten Position gezeigt, wobei im Bereich der Klappen 7" kein Filtermaterial dargestellt ist, um die Öffnungsmechanik besser sehen zu können. Zudem ist die Portionspackung 1 auch nicht mit Extraktionsmaterial gefüllt.

Wenn die Portionspackung 1 über Quellprozesse durch eine Flüssigkeit geöffnet wird, werden die sechs Klappen 7" im Wesentlichen gleichzeitig geöffnet, wobei die Klappen 7" mit den oberen Verschlussmitteln 10", die oberhalb der Verschlussmittel 10" der unteren Klappen 7" angeordnet sind, nur kurz nacheinander geöffnet werden. Durch die Quellprozesse werden die Klappen 7" im Wesentlichen gleichzeitig verschwenkt.

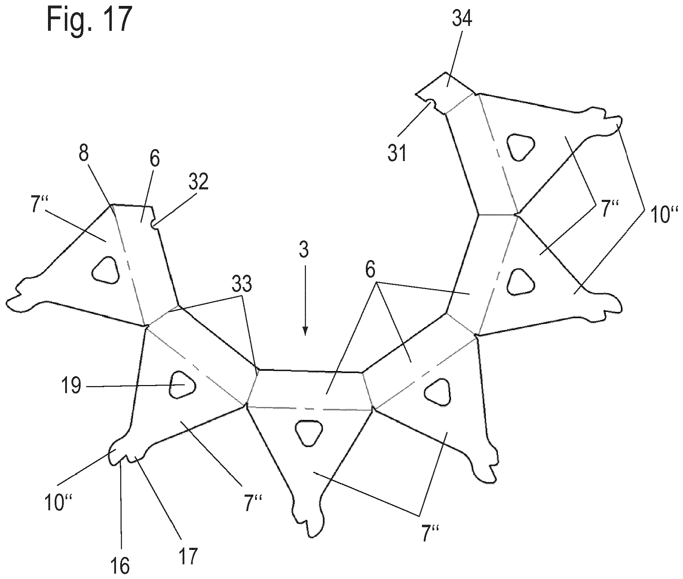

In Figur 17 ist der Stützkörper 3 in einem Zuschnitt gezeigt. Der Stützkörper 3 ist als einstückiges Bauteil aus Kartonage hergestellt und umfasst sechs Arme oder Klappen 7", die jeweils über Faltkanten 8 mit einem seitlichen Abschnitt 6 verbunden sind. Die seitlichen Abschnitte 6 können ringförmig entlang von Faltkanten 33 gefaltet werden, wobei an einem endseitigen Abschnitt 6 ein Verbindungssteg 34 angeformt ist, der mit einem gegenüberliegenden seitlichen Abschnitt 6 verbunden werden kann, beispielsweise durch Verkleben. An dem Verbindungssteg 34 ist eine Aussparung 31 vorgesehen, die zur Ausrichtung des Stützkörpers 3 beim Verkleben in Deckung mit einer Aussparung 32 an einem endseitigen seitlichen Abschnitt 6 gebracht werden kann. Der Zuschnitt aus Filtermaterial kann ebenfalls einstückig hergestellt sein und entlang eines Verbindungsabschnittes miteinander verklebt oder durch Prägen verbunden sein, um einen tütenförmigen Behälter 2 herzustellen. Der Stützkörper 3 wird vorzugsweise außen an dem Filtermaterial angebracht, optional kann er aber auch an einer Innenseite des Filtermaterials vorgesehen werden. Zudem kann die Anzahl der Klappen 7" auch variiert werden.

### Bezugszeichenliste

- 1: Portionspackung
- 2: Behälter
- 3, 3': Stützkörper
- 4: Spitze
- 5: Seitenkante
- 6, 6': Abschnitt
- 7, 7', 7": Klappe
- 8: Faltkante
- 9: Abschnitt
- 10, 10": Verschlussmittel
- 10': Vorsprung
- 11: Extraktionsmaterial
- 12: Zusatzvolumen
- 13: Zusatzvolumen
- 14: Tropfen
- 15: Getränk
- 16: Führungskante
- 17: Rastvorsprung
- 18: Aussparung
- 19: Aussparung
- 30, 30': Randabschnitt
- 31: Aussparung
- 32: Aussparung
- 33: Faltkante
- 34: Verbindungssteg
- 50: Randstreifen
- 51: Randstreifen

## Patentansprüche

1. Verfahren zur Herstellung eines Getränks mit einer Portionspackung (1), umfassend einen Behälter (2) aus Filtermaterial, in dem ein Extraktionsmaterial angeordnet ist, und einen Stützkörper (3), der den Behälter (2) zumindest bereichsweise umgibt, mit den folgenden Schritten:
- Einlegen der geschlossenen Portionspackung (1) in ein Filtergefäß;
- Öffnen des Behälters (2) der Portionspackung an einer Oberseite und Vergrößern des Innenvolumens des Behälters (2) um mindestens 50 % verglichen mit dem Innenvolumen in der geschlossenen Position, und
- Aufbringen von Wasser auf das Extraktionsmaterial zur Getränkezubereitung,
wobei der Stützkörper (3) mindestens eine Faltkante (8) aufweist, die mit einer verschwenkbaren Klappe (7) verbunden ist, und das Öffnen der Portionspackung an der Oberseite über ein Verschwenken der mindestens einen Klappe (7) erfolgt, **dadurch gekennzeichnet, dass** ein an der mindestens einen Klappe (7) fixierter oberer Abschnitt des Filtermaterials mitverschwenkt wird.

2. Verfahren nach Anspruch 1, **dadurch gekennzeichnet, dass** für das Öffnen die Portionspackung (1) im Bereich der Faltkanten (8) für einen Quellprozess befeuchtet wird, so dass ein Öffnen der Portionspackung (1) selbsttätig erfolgt.

3. Verfahren nach Anspruch 1 oder 2, **dadurch gekennzeichnet, dass** das Öffnen des Behälters (2) der Portionspackung (1) durch Aufbringen von heißem Wasser erfolgt, wobei die mindestens eine Faltkante (8) an dem Stützkörper (3) befeuchtet wird.

4. Verfahren nach Anspruch 2 oder 3, **dadurch gekennzeichnet, dass** die zumindest eine oder mehreren Klappen (7, 7') des Stützkörpers (3, 3') an einer Oberseite des Behälters (2) beim Öffnen zwischen 90° und 180°, insbesondere zwischen 110° bis 150°, verschwenkt werden.

5. Verfahren nach einem der vorhergehenden Ansprüche, **dadurch gekennzeichnet, dass** zum Öffnen der Portionspackung Wasser mit einer Menge zwischen 5 ml bis 100 ml, insbesondere 10 ml bis 50 ml, auf die Portionspackung (1) aufgebracht wird, und dann nach dem Öffnen der Portionspackung heißes Wasser auf das Extraktionsmaterial der Portionspackung (1) aufgebracht wird.

6. Portionspackung (1) für die Herstellung eines Getränkes, insbesondere Kaffee, umfassend einen Behälter (2) aus Filtermaterial, in dem ein Extraktionsmaterial angeordnet ist, und einen Stützkörper (3, 3') der den Behälter (2) zumindest bereichsweise umgibt, wobei der Behälter (2) in einer Ausgangsposition geschlossen ausgebildet ist und durch Verschwenken zumindest eines Teils des Randes des Filtermaterials an der Oberseite zu öffnen ist, und das Innenvolumen des Behälters (2) in der geöffneten Position der Portionspackung (1) um mindestens 50 % größer ist als das Innenvolumen der Portionspackung in der geschlossenen Position, wobei der Stützkörper (3) mindestens eine Faltkante (8) aufweist, um die eine Klappe (7) zum Zwecke des Öffnens der Portionspackung an der Oberseite verschwenkbar ist, **dadurch gekennzeichnet, dass** ein oberer Abschnitt des Filtermaterials an der mindestens einen Klappe (7) fixiert ist.

7. Portionspackung nach Anspruch 6, **dadurch gekennzeichnet, dass** die Faltkante (8) zum Öffnen des Behälters (2) befeuchtet werden kann, um ein Verschwenken einer Klappe (7) des Stützkörpers (3, 3') um die Faltkante (8) zu bewirken.

8. Portionspackung nach Anspruch 6 oder 7, **dadurch gekennzeichnet, dass** der Stützkörper (3, 3') zumindest teilweise aus Karton hergestellt ist.

9. Portionspackung nach einem der Ansprüche 6 bis 8, **dadurch gekennzeichnet, dass** die Faltkante (8) umlaufend ausgebildet ist und bereichsweise durch mindestens eine Aussparung (18) unterbrochen ist.

10. Portionspackung nach Anspruch 9, **dadurch gekennzeichnet, dass** bezogen auf die Länge der umlaufenden Faltkante (8) die Länge der Aussparungen zwischen 20 % bis 50 % der Länge der Faltkante (8) einnehmen.

11. Portionspackung nach Anspruch 6, **dadurch gekennzeichnet, dass** die mindestens eine Klappe (7, 7") eine Aussparung (19) auf der Fläche mit einem Abstand zur Faltkante (8) besitzt.

12. Portionspackung nach einem der Ansprüche 6 bis 11, **dadurch gekennzeichnet, dass** mindestens vier Klappen (7), vorzugsweise fünf bis acht Klappen (7), vorgesehen sind, die verschwenkbar an der Faltkante (8) gelagert sind.

13. Portionspackung nach Anspruch 12, **dadurch gekennzeichnet, dass** die verschwenkbaren Klappen (7, 7") zumindest im Bereich der Verschlussmittel (10, 10") in der geschlossenen Position der Portionspackung (1) in mindestens zwei Ebenen aufeinander angeordnet sind.

## Claims

1. Method for producing a beverage with a portion pack (1), comprising a container (2) made of filter material in which an extraction material is arranged and a supporting body (3) surrounding the container (2) at least in some areas, comprising the following steps:
- inserting the closed portion pack (1) into a filter vessel;
- opening the container (2) of the portion pack on an upper side and increasing the inner volume of the container (2) by at least 50 % compared to the inner volume in the closed position, and
- applying water to the extraction material for beverage preparation, whereby the supporting body (3) comprises at least one folding edge (8) which is connected to a pivotable flap (7), and the opening of the portion pack on the upper side is effected by pivoting the at least one flap (7), **characterized in that** an upper section of filter material which is fixed to the at least one flap (7) is pivoted along with the flap (7).

2. Method according to claim 1, **characterized in that** for opening, the portion pack (1) is moistened in the region of the folding edges (8) for a swelling process, so that opening of the portion pack (1) is automatic.

3. Method according to claim 1 or 2, **characterized in that** the opening of the container (2) of the portion pack (1) is effected by applying hot water, wherein the at least one folding edge (8) on the supporting body (3) is moistened.

4. Method according to claim 2 or 3, **characterized in that** the at least one or more flaps (7, 7') of the supporting body (3, 3') on an upper side of the container (2) are pivoted during opening between 90° and 180°, in particular between 110° and 150°.

5. Method according to one of the preceding claims, **characterized in that** for opening the portion pack, water in an amount between 5 ml to 100 ml, in particular 10 ml to 50 ml, is applied to the portion pack (1), and then, after opening the portion pack, hot water is applied to the extraction material of the portion pack (1).

6. Portion pack (1) for the production of a beverage, in particular coffee, comprising a container (2) made of filter material, in which an extraction material is arranged, and a supporting body (3, 3') which surrounds the container (2) at least in some areas, wherein the container (2) is closed in an initial position and can be opened by pivoting at least part of the edge of the filter material at an upper side, and the inner volume of the container (2) in the open position of the portion pack (1) is at least 50% greater than the inner volume of the portion pack in the closed position, whereby the supporting body (3) has at least one folding edge (8) around which a flap (7) can be pivoted for opening the portion pack at the upper side, **characterized in that** an upper section of the filter material is fixed to the at least one flap (7).

7. Portion pack according to claim 6, **characterized in that** the folding edge (8) can be moistened for opening the container (2) to cause a flap (7) of the supporting body (3, 3') to pivot about the folding edge (8).

8. Portion pack according to claim 6 or 7, **characterized in that** the supporting body (3, 3') is at least partially made of cardboard.

9. Portion pack according to one of claims 6 to 8, **characterized in that** the folding edge (8) is formed all round and is interrupted in regions by at least one recess (18).

10. Portion pack according to claim 9, **characterized in that,** based on the length of the circumferential folding edge (8), the length of the recesses occupies between 20% to 50% of the length of the folding edge (8).

11. Portion pack according to claim 6, **characterized in that** at least one flap (7, 7") has a recess (19) on the surface at a distance from the folding edge (8).

12. Portion pack according to one of claims 6 to 11, **characterized in that** at least four flaps (7), preferably five to eight flaps (7), are provided, which are pivotably mounted on the folding edge (8).

13. Portion pack according to claim 12, **characterized in that** the pivotable flaps (7, 7") are arranged in at least two planes one on top of the other at least in the region of the closure means (10, 10") in the closed position of the portion pack (1).

## Revendications

1. Procédé de préparation d'une boisson avec un paquet d'une portion (1) comprenant un récipient (2) en un matériau filtrant contenant un produit d'extraction et un support (3) entourant au moins partiellement le récipient (2), comprenant les étapes suivantes consistant à :
- placer le paquet d'une portion (1), fermé, dans un récipient de filtre,
- ouvrir le récipient (2) du paquet d'une portion par le côté supérieur et augmenter le volume intérieur du récipient (2) d'au moins 50% par comparaison avec le volume intérieur à l'état fermé, et
- appliquer de l'eau sur le produit d'extraction pour préparer la boisson, l'organe d'appui (3) ayant au moins une arête de pliage (8) reliée à un volet pivotant (7) et ouvrir le paquet d'une portion par le côté supérieur, en basculant d'au moins un volet (7),
procédé **caractérisé en ce que**
on bascule en même temps un segment supérieur du matériau filtrant fixé à au moins un volet (7).

2. Procédé selon la revendication 1,
**caractérisé en ce que**
pour ouvrir, on humidifie le paquet d'une portion (1) dans sa région des arêtes de pliage (8) pour gonfler de façon que l'ouverture du paquet d'une portion (1) se fasse d'elle-même.

3. Procédé selon la revendication 1 ou 2,
**caractérisé en ce que**
on ouvre le récipient (2) du paquet d'une portion (1) en appliquant de l'eau chaude et on humidifie au moins une arête de pliage (8) du support (3).

4. Procédé selon la revendication 2 ou 3,
**caractérisé en ce que**
on bascule au moins un ou plusieurs volets (7, 7') du support (3, 3') sur le côté supérieur du récipient (2) en ouvrant entre 90° et 180°, notamment entre 110° et 150°.

5. Procédé selon l'une des revendications précédentes,
**caractérisé en ce que**
pour ouvrir le paquet d'une portion, on applique une quantité d'eau comprise entre 5 ml et 100 ml et notamment entre 10 ml et 50 ml au paquet d'une portion (1) et ensuite après l'ouverture du paquet d'une portion, on applique de l'eau chaude sur le produit contenu dans le paquet d'une portion (1).

6. Paquet d'une portion (1) pour la préparation d'une boisson, notamment du café, comprenant un récipient (2) en un matériau filtrant muni d'un produit d'extraction et un support (3, 3') entourant au moins par zones, le récipient (2),
le récipient (2) étant fermé à l'état initial et on l'ouvre en basculant au moins une partie du bord du matériau filtrant sur le côté supérieur, et le volume intérieur du récipient (2) à l'état ouvert du paquet d'une portion (1) est au moins 50% plus grand que le volume intérieur du paquet d'une portion à l'état fermé,
- le support (3) comprend au moins une arête de pliage (8) autour de laquelle pivote un volet (7) pour ouvrir le paquet d'une portion,
paquet **caractérisé en ce que**
un segment supérieur du matériau filtrant est fixé à au moins un volet (7).

7. Paquet d'une portion selon la revendication 6,
**caractérisé en ce que**
on humidifie l'arête de pliage (8) pour ouvrir le récipient (2), et par basculement on fait pivoter un volet (7) du support (3, 3') autour de l'arête de pliage (8).

8. Paquet d'une portion selon la revendication 6 ou 7,
**caractérisé en ce que**
le support (3, 3') est réalisé au moins en partie en carton.

9. Paquet d'une portion selon l'une des revendications 6 à 8, **caractérisé en ce que**
l'arête de pliage (8) est périphérique et elle est interrompue par zones par au moins un évidement (18).

10. Paquet d'une portion selon la revendication 9,
**caractérisé en ce que**
rapportée à la longueur de l'arête de pliage (8) périphérique, la longueur des évidements représente entre 20% et 50% de la longueur de l'arête de pliage (8).

11. Paquet d'une portion selon la revendication 6,
**caractérisé en ce que**
au moins un volet (7, 7") a un évidement (19) dans sa surface à distance de l'arête de pliage (8).

12. Paquet d'une portion selon l'une des revendications 6 à 11, **caractérisé en ce que**
il comporte au moins quatre volets (7), de préférence cinq à huit volets (7) pivotants par rapport à l'arête de pliage (8).

13. Paquet d'une portion selon la revendication 12,
**caractérisé en ce que**
les volets pivotants (7, 7") sont superposés au moins dans deux plans lorsque le paquet (10, 10") d'une portion (1) est à l'état fermé.
